# EUROPÄISCHE PATENTSCHRIFT

(11) **EP 0 557 603 B1**
(45) Veröffentlichungstag und Bekanntmachung des Hinweises auf die Patenterteilung: **30.07.1997**
(21) Anmeldenummer: 92120970.6
(22) Anmeldetag: 09.12.1992
(51) Int. Cl.: F16F 15/16

(54) **Drehschwingungsdämpfer, insbesondere Viskositäts-Drehschwingungsdämpfer**
Torsional vibration damper, in particular viscosity-damper
Amortisseur de vibrations en torsion, en particulier amortisseur à viscosité

(30) Priorität: 25.02.1992 DE 4205764
(43) Veröffentlichungstag der Anmeldung: 01.09.1993
(73) Patentinhaber: HASSE & WREDE GmbH, D-12347 Berlin (DE)
(72) Erfinder: Conseur, Joachim, W-1000 Berlin 45 (DE)
(74) Vertreter: Specht, Peter, Dipl.Phys.

(56) Entgegenhaltungen:
- GB-A- 650 891
- US-A- 4 787 868
- PATENT ABSTRACTS OF JAPAN vol. 2, no. 74 (M-23)10. Juni 1978 & JP-A-53 038 863 (MITSUBISHI DENKI KK)

## Beschreibung

Die Erfindung betrifft einen Drehschwingungsdämpfer nach dem Gattungsbegriff des Patentanspruches 1.

Drehschwingungsdämpfer dienen dazu, schädliche Drehschwingungen rotierender Wellen, insbesondere von Kurbelwellen zu dämpfen. Die Leistungsfähigkeit derartiger Dämpfer, insbesondere der Viskositäts-Drehschwingungsdämpfer, hängt, sofern die Ankopplung der im Dämpfergehäuse befindlichen seismischen Masse optimal abgestimmt ist, nur noch vom Wärmedurchgang zwischen dem Dämpfungsmedium, der Wand des Dämpfergehäuses und der Lufthülle ab. Hierbei kann der vom Dämpfungsmedium ausgehende Energietransport durch das Blechgehäuse, insbesondere bei dünnwandiger Ausgestaltung desselben, als wenig beeinflußbar angesehen werden. Ein Überschreiten der maximal zulässigen Betriebstemperatur führt zu einem "Kochen" des Dämpfers; die Einsatzmöglichkeiten der Dämpfer sind also nahezu ausschliesslich durch die Wärmeleitfähigkeit, also den Wäremübergang an die Umgebungsluft, begrenzt und vorgegeben.

Aus der GB-A-650 891 ist bereits ein Drehschwingungsdämpfer mit Lüfterflügeln zur verbesserten Wärmeabgabe bekannt.

Davon ausgehend besteht die Aufgabe der Erfindung darin, einen Drehschwingungsdämpfer, insbesondere Viskositäts-Drehschwingungsdämpfer der in Rede stehenden Art so weiterzubilden, daß eine nochmals verbesserte Wärmeabgabe an die Umgebungsluft ermöglicht ist. Bei vorgegebenem Bauraum soll insbesondere erhöhte Leistungsfähigkeit gegeben sein, bzw. soll eine gegebene Dissipationsleistung von einem kleineren, billiger herzustellenden Dämpfer ohne Überhitzung bewältigbar sein. In der Folge soll dies auch zu einer Reduzierung des Herstellungsaufwands bei Dämpfern hoher Leistungsfähigkeit führen.

Zur Lösung dieser Aufgabe dienen die Merkmale nach dem Kennzeichnungsteil des Patentanspruches 1.

Durch die Verwendung der an wenigstens einer der Stirn- bzw. Planflächen des Dämpfergehäuses des Drehschwingungsdämpfers applizierten Lüfterflügel ist es in baulich einfacher und kostengünstiger Weise möglich, eine verbesserte Konvektion zu erreichen. Die Lüfterflügel sind vorzugsweise auf der Lüfterscheibe ausgebildet und auf wenigstens einem Teilkreis aus dem Material derselben herausgearbeitet, z.B. herausgestanzt, wodurch sie bei Rotation des Dämpfers zu einer verstärkten Luftverwirbelung und in der Folge zu verbesserter Wärmeabführung beitragen. Die Lüfterscheibe ist in baulich einfacher und kostengünstiger Weise aus dünnem Blech von guter Wärmeleitfähigkeit hergestellt, wobei die Lüfterflügel an drei Seiten eingeschnitten und aus der Blechebene der Lüfterscheibe aufgekantet werden. Die Masse der z.B. aus Aluminium oder dgl. Material guter Wärmeleitfähigkeit bestehenden Lüfterscheibe(n) vermehrt das primäre Massenträgheitsmoment des Schwingungsdämpfers nicht wesentlich. Um einen guten Wärmedurchgang zwischen dem Material des Dämpfergehäuses und der Lüfterscheibe zu erreichen, ist diese z.B. mittels eines wärmeleitenden Klebstoffs mit der zugeordneten Planfläche des Dämpfers verbunden.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.
- Fig.1: ist eine halbierte Schnittansicht des erfindungsgemäßen Drehschwingungsdämpfers; und
- Fig.2: ist eine Teildraufsicht auf eine Lüfterscheibe des Drehschwingungsdämpfers nach Fig.1.

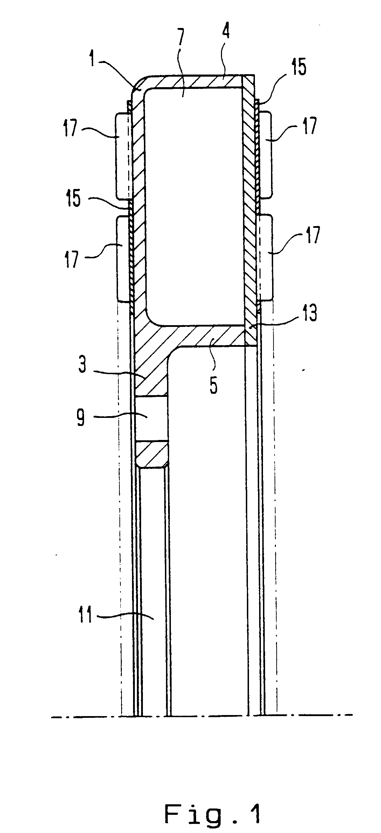

In Fig.1 der Zeichnung ist in halbierter Schnittansicht ein erfindungsgemäßer Viskositäts-Drehschwingungsdämpfer dargestellt, welcher ein Dämpfergehäuse 1 mit einem radial innenseitigen Befestigungsflansch 3 aufweist. Das Dämpfergehäuse 1 ist z.B. aus Stahlblech oder einem anderen geeigneten Werkstoff gefertigt und umschließt mit einem Außenmantel 4 und einem Innenmantel 5 eine Arbeitskammer 7, in welcher sich eine (nicht dargestellte) gleitgelagerte seismische Masse als auch das viskose Dämpfungsmedium befinden.

Die Erfindung ist nicht auf die dargestellte Ausführungsform und das Material des Dämpfergehäuses 1 beschränkt, d.h., es sind nach verschiedenen Verfahren gefertigte Dämpfergehäuse bekannt, an welchen die nachfolgend beschriebene, erfindungsgemäße Anordnung in gleicher Weise verwirklicht werden kann.

Am Innenumfang des Befestigungsflansches 3 befinden sich in herkömmlicher Weise auf einem Teilkreis Schraubenlöcher 9 zur Aufnahme von (nicht gezeigten) Schrauben, mit welchen der Viskositätsdämpfer an einem rotierenden Maschinenteil, z.B. einer zu bedämpfenden Kurbelwelle, angeschraubt oder sonst wie in Verbindung gebracht werden kann. Die Mittenöffnung 11 kann einen Zentrieransatz oder dgl. des zu bedampfenden Maschinenteils aufnehmen. Grundsätzlich sind auch andere kraft- oder formschlüssige Verbindungen des Dämpfergehäuses mit der zu dämpfenden Welle denkbar.

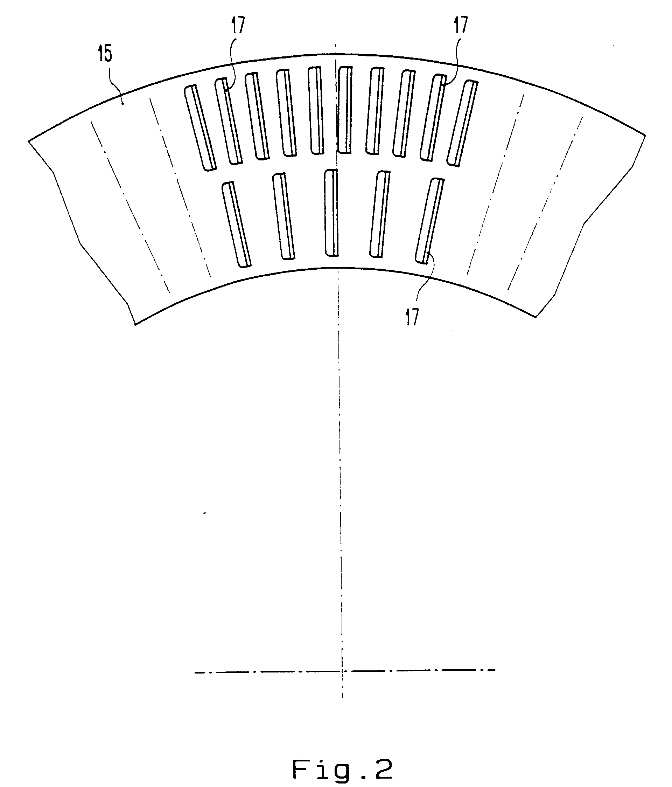

Die in der Schnittansicht nach Fig.1 rechte Seite der Arbeitskammer 7 des Viskositätsdämpfers ist durch einen Deckel 13 in an sich bekannter Weise verschlossen. Der Deckel 13 kann aus einem gestanzten oder in sonstiger Weise geformten Blechteil hergestellt sein. Gemäß der Erfindung ist an wenigstens einer der Plan- bzw. Frontseiten des Dämpfergehäuses, im dargestellten Ausführungsbeispiel an beiden Seiten, eine Lüfterscheibe 15 befestigt. Die Lüfterscheiben 15 sind aus Ronden dünnen Blechs hergestellt und mit einer Vielzahl von Lüfterflügeln 17 (Fig.2) versehen. Die Lüfterflügel wurden aus dem Rondenmaterial an drei Seiten eingeschnitten und aus der Blechebene aufgekantet. Die Lüfterscheibe 15 besteht aus einem Werkstoff, z.B. aus Aluminium, welches das primäre Massenträgheitsmoment des Viskositätsdämpfers nicht wesentlich vermehrt und die Wärme gut leitet. Im Rahmen des der Erfindung eigenen allgemeinen Gedankens ist es auch möglich, die Lüfterflügel ohne tragende Lüfterscheibe, d.h. als eine Vielzahl einzelner Bauteilchen auf der Planseite des Dämpfers anzuordnen, d.h. geordnet zu befestigen; die Möglichkeit und die Art einer derartigen Befestigung hängt hierbei naturgemäß von der Dicke des Dämpfergehäuses ab.

Bei der in Fig.2 wiedergegebenen Teildraufsicht sind auf zwei Teilkreisen angeordnete Lüfterflügel 17 von unterschiedlichem Winkelabstand zueinander dargestellt. Die Lüfterflügel sind im wesentlichen radial auswärts stehend aus dem Material der Lüfterscheibe 15 herausgearbeitet, derart, daß eine drehrichtungsunabhängige Verwendung der Lüfterscheibe gegeben ist. In besonderen Einsatzfällen kann es möglich sein, den Lüfterflügeln eine optimierte Ausformung mit Präferenz der Drehrichtung zu verleihen.

Die Verbindung der Lüfterscheibe(n) mit dem Dämpfergehäuse 1 erfolgt mit einem wärmeleitenden (verfüllten) Klebstoff, welcher auf den Stirn- bzw. Planflächen des Viskositätsdämpfers aufgebracht wird, wonach die Lüfterscheibe ggf. unter Wärmeeinwirkung seitlich am Dämpfergehäuse angepreßt wird. Die Wärmeleitfähigkeit des Klebstoffs ist von Bedeutung, da der Wärmetransport vom Dämpfergehäuse über die Lüfterscheiben an die Außenluft zu bewerkstelligen ist. Es sind auch andere (nicht dargestellte) Möglichkeiten der Verbindung der Lüfterscheibe(n) mit dem Dämpfergehäuse möglich, immer unter der Voraussetzung, daß eine gute Wärmeübertragung zwischen Dämpfergehäuse und Lüfterscheibe(n) sichergestellt ist.

Es sind vorzugsweise Vorkehrungen zu treffen, damit die unterschiedlichen Wärmdehnungen zwischen dem Gehäuse des Viskositätsdämpfers und der die Lüfterscheibe bildende Ronde nicht zu schädlichen Schub- und Zugspannungen führen; so kann die Lüfterscheibe in einigen Bereichen Durchtrennungen aufweisen, die beispielsweise einige der Durchbrüche des inneren Flügel-Kreises mit einigen der Durchbrüche des äußeren Flügel-Kreises verbinden.

Der Aufwand zur "Beflügelung" der Dämpfer ist gering. Die vorstehend beschriebene Anordnung hat den Vorteil, daß sie das bisherige Herstellverfahren der Dämpfer selbst nicht beeinflußt, sondern erst nach dessen Abschluß vorgenommen wird. Bereits bestehende und ggf. auch bereits im Einsatz befindliche Dämpfer sind somit nachrüstbar.

### Bezugszeichenliste

- 1: Dämpfergehäuse
- 3: Befestigungsflansch
- 4: Außenmantel
- 5: Innenmantel
- 7: Arbeitskammer
- 9: Schraubenloch
- 11: Mittenöffnung
- 13: Deckel
- 15: Lüfterscheibe
- 17: Lüfterflügel

## Patentansprüche

1. Drehschwingungsdämpfer, insbesondere Viskositäts-Drehschwingungsdämpfer, mit einem eine Arbeitskammer umschließenden Dämpfergehäuse, welches mit einem zu bedämpfenden Maschinenteil verbindbar ist, wobei an wenigstens einer der beiden Planflächen des Drehschwingungsdämpfers eine Lüfterscheibe, die Lüfterflügel (17) trägt, angebracht ist, dadurch gekennzeichnet, daß einige Lüfterflügel (17) auf einem ersten Teilkreis der Lüfterscheibe (15) unter Winkelabstand zueinander aus dem Material der Lüfterscheibe (15) radial stehend herausgearbeitet sind und daß die übrigen Lüfterflügel (17) auf einem zweiten Teilkreis aus dem Material der Lüfterscheibe herausgearbeitet sind, wobei die Lüfterflügel (17) des äußeren Teilkreises kleineren Winkelabstand zueinander besitzen als die Lüfterflügel des inneren Teilkreises.

2. Drehschwingungsdämpfer nach Anspruch 1, dadurch gekennzeichnet, daß die Lüfterscheibe (15) aus Aluminium oder einem vergleichbar gut wärmeleitenden Werkstoff geringer Dichte besteht.

3. Drehschwingungsdämpfer nach einem der vorangehenden Ansprüche, dadurch gekennzeichnet, daß die Lüfterscheibe (15) mittels eines wärmeleitenden Klebstoffs auf der zugeordneten Planfläche des Dämpfergehäuses befestigt ist.

4. Drehschwingungsdämpfer nach einem der vorangehenden Ansprüche, dadurch gekennzeichnet, daß die Lüfterscheibe (15) mittels eines an sich bekannten Fügeverfahrens gut leitend mit dem Dämpfergehäuse verbunden ist.

5. Drehschwingungsdämpfer nach einem der vorangehenden Ansprüche, dadurch gekennzeichnet, daß die Lüfterflügel ohne Präferenz der Drehrichtung des Dämpfers aus dem Material der Lüfterscheibe herausgearbeitet sind.

6. Drehschwingungsdämpfer nach einem der vorangehenden Ansprüche, dadurch gekennzeichnet, daß beliebig geformte und beliebig gerichtete Lüfterflügel am Außenmantel (4) und/oder Innenmantel (5) des Dämpfergehäuses angebracht sind.

7. Drehschwingungsdämpfer nach einem der vorangehenden Ansprüche, dadurch gekennzeichnet, daß die auf den Plan- und/oder Umfangsflächen des Dämpfergehäuses angebrachten Lüfterflügel durch zusätzliche Leitbleche abgedeckt sind, derart, daß definierte Luftführungen gebildet sind.

## Claims

1. A torsional vibration damper, in particular viscosity torsional vibration damper, having a damper housing enclosing a working chamber and adapted to be connected with a machine part to be damped, a fan disk carrying fan blades (17) being mounted on at least one of the two end faces of the torsional vibration damper, characterized in that some fan blades (17) are worked out of the material of the fan disk (15) standing radially at an angular distance from one another on a first graduated circle of the fan disk (15), and the remaining fan blades (17) are worked out of the fan disk material on a sec-ond graduated circle, the fan blades (17) of the outer gradu-ated circle having a smaller angular distance from one an-other than the fan blades of the inner graduated circle.

2. The torsional vibration damper of claim 1, characterized in that the fan disk (15) is made of aluminum or a com-parably highly heat-conductive material of low density.

3. The torsional vibration damper of one of the preced-ing claims, characterized in that the fan disk (15) is fas-tened to the associated end face of the damper housing by means of a heat-conductive adhesive.

4. The torsional vibration damper of one of the preced-ing claims, characterized in that the fan disk (15) is con-nected with the damper housing in highly conductive fashion by means of a joining method known in the art.

5. The torsional vibration damper of one of the preced-ing claims, characterized in that the fan blades are worked out of the fan disk material without preference for the di-rection of rotation of the damper.

6. The torsional vibration damper of one of the preced-ing claims, characterized in that fan blades of any form and direction are mounted on the outside casing (4) and/or inside casing (5) of the damper housing.

7. The torsional vibration damper of one of the preced-ing claims, characterized in that the fan blades mounted on the end faces and/or peripheral faces of the damper housing are covered by additional guiding plates in such a way as to form defined air ducts.

## Revendications

1. Amortisseur de vibrations en torsion, en particulier amortisseur à viscosité, comportant un boîtier d'amortisseur entourant une chambre de travail, lequel peut être relié à une pièce mécanique à amortir, dans lequel un disque de ventilateur, portant les ailettes de ventilateur, est monté sur au moins une des deux surfaces transversales de l'amortisseur de vibrations en torsion, caractérisé en ce que quelques ailettes de ventilateur (17) sont façonnées, en se dressant dans le sens radial, dans la matière du disque de ventilateur (15) sur un premier cercle gradué du disque de ventilateur (15) avec un écartement angulaire l'une par rapport à l'autre et en ce que les autres ailettes de ventilateur (17) sont façonnées dans la matière du disque de ventilateur sur un deuxième cercle gradué, les ailettes de ventilateur (17) du cercle gradué extérieur possédant l'une par rapport à l'autre un écartement angulaire plus petit que les ailettes de ventilateur du cercle gradué intérieur.

2. Amortisseur de vibrations en torsion selon la revendication 1, caractérisé en ce que le disque de ventilateur (15) est composé d'aluminium ou d'une matière comparativement bien thermoconductrice de plus faible densité.

3. Amortisseur de vibrations en torsion selon l'une des revendications précédentes, caractérisé en ce que le disque de ventilateur (15) est fixé sur la surface transversale associée du boîtier d'amortisseur à l'aide d'une colle thermoconductrice.

4. Amortisseur de vibrations en torsion selon l'une des revendications précédentes, caractérisé en ce que le disque de ventilateur (15) est relié au boîtier d'amortisseur de manière bien conductrice à l'aide d'un procédé d'assemblage connu en soi.

5. Amortisseur de vibrations en torsion selon l'une des revendications précédentes, caractérisé en ce que les ailettes de ventilateur sont façonnées dans la matière du disque de ventilateur indifféremment du sens de rotation de l'amortisseur.

6. Amortisseur de vibrations en torsion selon l'une des revendications précédentes, caractérisé en ce que des ailettes de ventilateur d'une quelconque forme et d'une quelconque orientation sont montées sur la gaine externe (4) et / ou la gaine interne (5) du boîtier d'amortisseur.

7. Amortisseur de vibrations en torsion selon l'une des revendications précédentes, caractérisé en ce que les ailettes de ventilateur montées sur les surfaces transversales et/ou périphériques du boîtier d'amortisseur sont recouvertes par des déflecteurs supplémentaires de sorte que des déflexions d'air définies sont formées.
